# EUROPEAN PATENT APPLICATION

(11) **EP 1 526 453 A2**
(43) Date of publication of application: **27.04.2005**
(21) Application number: 04009881.6
(22) Date of filing: 26.04.2004
(51) Int. Cl.: G06F 9/445

(54) **A system and method for providing user controlled migration of a client computer**

(30) Priority: 21.10.2003 US 690781
(71) Applicant: Hewlett-Packard Development Company, L.P., Houston, Texas 77070 (US)
(72) Inventor: Hohman, Jennifer L., Houston Texas 77008 (US)
(74) Representative: Schoppe, Fritz, Dipl.-Ing.

(57) **Abstract**

A system and method is provided a user controlled and automated migration of a client computer using a deployment framework with update tools. The method includes the operation of determining user migration specifications for a client computer using information received from a user through a user migration control interface coupled to the deployment framework (100). Another operation is checking the migration compliance of the client computer that is associated with the user (102). A client computer profile is generated based on the migration compliance of the client computer and the user migration specifications (104). An electronic approval can then be received from the user via the user migration control interface to initiate the migration of the client computer (108). A further operation is migrating the client computer as predetermined by the client computer profile using update tools connected to the deployment framework (110).

## Description

### FIELD OF THE INVENTION

The present invention relates generally to the user controlled migration of a client computer.

### BACKGROUND

The constant pattern of change and improvement in the computer industry means that corporations and companies who apply technology in their businesses generally upgrade and migrate their computer hardware and software on a regular basis. These frequent upgrades and software migrations consume a significant amount of time and money. The measured costs do not even include the considerable workflow disruptions and annoyances created by the migration process.

Applying upgrades to client computers has become an important part of an information technology strategy. Upgrades and migrations are important in part because of the constant security threats that are being directed toward users and computer networks. For example, computer software is constantly upgraded and changed to defend against computer viruses, computer hackers, and similar threats. In addition, software on a client computer may be found to have software flaws. Accordingly, patches are loaded periodically to correct such flaws.

The maintenance and upgrading of software and hardware in client computers has become a constant and repetitive process. Not only are upgrades and patches applied to computer systems but the release of new operating systems and new applications with improved features provide the impetus for computer system migration and upgrades. In order to take advantage of improvements in software functionality and hardware performance, computer systems are regularly migrated or upgraded by business organizations.

In today's networked computing environment, many businesses have client computers for each individual employee at the location where the employee works. The client computers can be connected to central servers, switching hardware, and routers in order to form a network. The sheer number of these client computers can often make upgrades or migrations a challenge.

Several years ago the typical upgrade process for deploying and upgrading clients across an entire business enterprise was to manually upgrade each individual computer. This meant that a computer technician physically visited each location where a client computer was located and upgraded the computer software and/or hardware depending on the migrations or updates that were needed. This manual upgrade process is generally expensive and difficult to implement when scheduling large-scale migrations (e.g., operating system upgrades) for a large number of client computers.

In more recent years, networked management applications have been developed to help perform some activities involved in upgrading or migrating the software and hardware for a client computer. The types of activities that can be performed by networked management applications include the operations of: backing up user settings, collecting important user data, preparing a client computer for upgrades, remotely installing software upgrades, and restoring user data. For example, a system technician can use a networked management application to remotely upgrade an existing client computer by erasing and reloading software or by refreshing software on the client computer without erasing the existing software.

The use of automated management applications to upgrade, migrate, refresh, and patch the software loaded on client computers has reduced the time system administrators spend in migrating and upgrading the software for client computers. Despite this increase in upgrade and migration deployment speed, the applications used to control the migrations and upgrades are highly specialized and relatively complex applications that are overseen by the system administrators. These dedicated management applications include many settings and specific configurations that system administrators have the expertise to set and monitor.

Utilizing automated software management applications to deploy upgrades over a network is an improvement over previous systems because of the time saved in deploying software directly to multiple client computers simultaneously. However, system administrators still spend a significant amount of time orchestrating the upgrade management life cycle. System administrators and technical support personnel spend a large amount of time interfacing with users, company management, purchasing, and other individuals in upgrading computer hardware and software. Each of these interfaces and decision points typically include paper approval forms, individual meetings, and similar time consuming tasks.

### SUMMARY OF THE INVENTION

A system and method is provided for user controlled and automated migration of a client computer using a deployment framework with update tools. The method includes the operation of determining user migration specifications for a client computer using information received from a user through a user migration control interface coupled to the deployment framework. Another operation is checking the migration compliance of the client computer that is associated with the user. A client computer profile is generated based on the migration compliance of the client computer and the user migration specifications. An electronic approval can then be received from the user, technical support or business management via the user migration control interface to initiate the migration of the client computer. A further operation is migrating the client computer as predetermined by the client computer profile using update tools connected to the deployment framework.

### BRIEF DESCRIPTION OF THE DRAWINGS

FIG. 1 is a flow chart illustrating a method for user controlled migration of a client computer in accordance with an embodiment of the present invention;
FIG. 2 is a block diagram illustrating an embodiment of a system for user controlled migration of a client computer using a deployment framework with update tools; and
FIG. 3 is a block diagram illustrating the data flow and processes in a system for user controlled migration of a client computer using a deployment framework with update tools in an embodiment of the invention.

### DETAILED DESCRIPTION

Reference will now be made to the exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the inventions as illustrated herein, which would occur to one skilled in the relevant art and having possession of this disclosure, are to be considered within the scope of the invention.

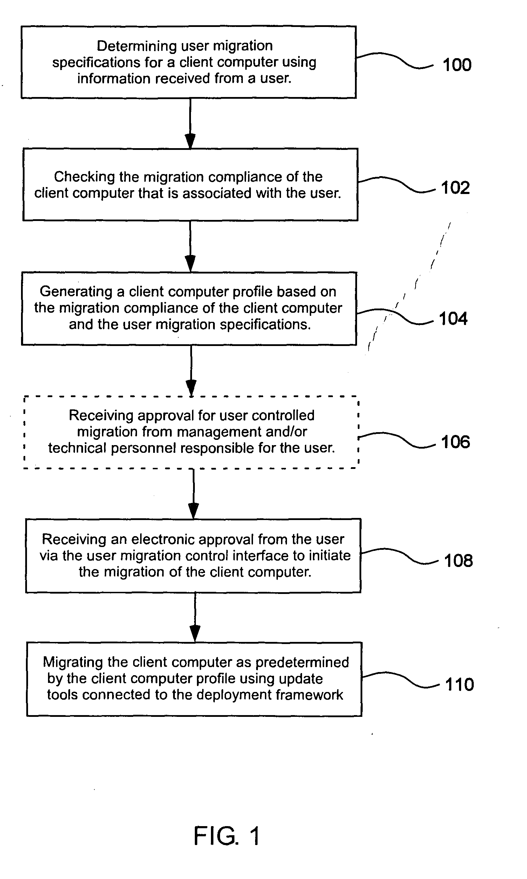

The present invention provides a system and method for providing a user controlled and automated migration of a client computer using a deployment framework with update tools. FIG. 1 illustrates one embodiment of a method for the present invention to provide a user controlled and automated migration of a client computer using a deployment framework with update tools.

When business entities begin to migrate their client computers to another operating system platform or application, the business entity is faced with developing many manual processes. Both manual business processes and manually controlled technical processes may be developed to manage, communicate, and perform the migrations. The deployment framework of the present invention helps to reduce the manually intensive processes that are involved with client computer migrations. Particularly, such a framework helps eliminate the low-end technical resources and some personnel that are used to migrate client computers and this decreases the overall cost of migration projects.

The method of the present invention includes the operation of determining user migration specifications for a client computer using information received from a user as in block 100. The user migration specifications can generally include software specifications detailing the software applications or suites the user needs to have loaded for their work duties or other desired functions. In addition, the user migration specifications may include user requests for improved hardware. For example, a user may request more computer memory or an upgraded video card.

The information regarding the user migration specifications can be received through a user migration control interface coupled to the deployment framework. This user migration control interface may be a group of web pages or a web application that can be accessed through a network browser (e.g., Internet Explorer) by a user. Alternatively, the user migration control interface can be a compiled application loaded on the client computer that acts as a client to the deployment framework. In addition, the user may login to the migration control interface with a password and login that identifies the user of the deployment framework within the organization or the system can automatically detect the user's security credentials.

Another operation is checking the migration compliance of the client computer that is associated with the user as in block 102. Checking the migration compliance can include a number of different processes that may be used based on the compliance level to be checked for a given migration scenario. In one embodiment, a client computer can be checked for hardware compliance to determine if the hardware of the client computer is compatible with or can utilize the software images and applications that will be loaded. The system can also detect if the hardware and software meet corporate standards.

In another embodiment, the client computer can be checked to identify the operating system version, application program interface (API) versions, or other software versions that are loaded to determine whether the specific applications to be loaded can integrate with existing software. The compliance check may also include a software and hardware inventory of the client computer. An inventory of the client computer can help ensure that the appropriate software for the user's work flow is re-loaded in a "wipe and load" migration. There may be important pieces of software on the client computer that the end user is not aware of and an entire listing (or partial listing) of previously loaded software can be captured by the migration compliance check.

Once compliance of the client computer has been checked, the operation of generating a client computer profile based on the migration compliance of the client computer and user software specifications can be carried out as in block 104. The client computer profile can include information that is combined from the migration compliance operation on the client's computer and the user migration specifications. For example, the user migration specifications may include a request for a new photo imaging application to be loaded on the user's client computer. In addition, the client computer profile can include information denoting that the previous software loaded on the client computer did not include photo imaging software. Thus, this is a new request that needs approval through the appropriate management channels.

An optional operation that can be included in the method is receiving approval for the user controlled migration from management personnel responsible for the user as in block 106. The management personnel can include business management and/or technical management personnel responsible for the user. In some situations, the user controlled migration can proceed without approval from management personnel. There may be some cases where users in a given organization are authorized to have any software that is available through the deployment framework. In that case, the approval step as illustrated can be skipped. However, in most situations, the end user will receive approval from management personnel responsible for physical hardware upgrades, software issues, and related cost issues. There may also be approvals from technical personnel to assure that the user is not requesting software or hardware they are not authorized for under technical security policies, etc.

A further operation in the present method is receiving an electronic approval from the user via the user migration control interface to initiate the migration of the client computer as in block 108. Part of this process can allow the user to double check the client computer profile that defines that software to be loaded onto the client computer. This approval can include user input through the web interface of the deployment framework to approve the day and time the migration will take place. Accordingly, the user has control of the upgrades and migration that will be performed by the framework. If the user does not agree with any part of the client computer profile, the user may modify the profile and resubmit it for additional management approvals.

Once the user approval has been received, the operation of migrating the client computer can be performed as in block 110. The migration of the client computer can be executed as predetermined by the client computer profile. In addition, update tools that are connected into the deployment framework can be used for the migration. These update tools can be plug-ins or third party tools which are controlled by the deployment framework, and the update tools may be script-driven through the framework. The update tools may include third party products such as software install tools, backup tools, disk imaging tools, and similar independent software products that can provide the functions needed to actually carry out the migration. Some companies which provide such information technology management tools are Altiris, Microsoft, Novell, LanDesk, and others. While the migration operations are being executed, the progress of the approvals, migrations, updates, and changes to the client computer can be tracked within the deployment framework and displayed to a user via a web interface or another graphical user interface.

The deployment framework provides the ability to automatically execute the business processes associated with multiple client computer migrations. Prior systems for providing migrations and upgrades have included just the technical processes that actually perform the migration rather than including business processes and client computer profile generation with the technical migration processes. The framework of the present invention helps customers leverage investments in previous migration applications even if these applications are disparate.

One valuable result of the present invention is that the deployment framework is not limited to any specific update tool that exists in the industry. In contrast to the independent update tools, the present invention provides a framework to control the processes surrounding the use of these update tools.

In the past, system administrators have used update tools to deploy a fixed software migration package onto multiple user desktops. Users have not generally been involved in these types of upgrades, migrations, virus updates, or bug patching processes. One valuable aspect of allowing a user to be involved in the migration and upgrade of their own client computer is that it reduces the time spent by technical support staff to interface with each user individually. Follow-up time by technical support staff is also reduced because the migration process is automated and the technical support staff or migration project team has less need to check and make sure that the appropriate hardware and software has been loaded into a user's client computer. For example, a system administrator may approve a client computer profile for a user but if this profile is incorrect then the end user can electronically reply to the system administrator and ask for additional software to be loaded. In other words, since a client computer profile is more likely to be correct using the present invention, this reduces overall follow-up. Moreover, additional management approvals can be provided electronically, which reduces the amount of time the migration process consumes.

Another valuable element of the present invention is that the migration compliance checking can include collecting an inventory of the client computer's hardware and software using an update tool. The creation of the client computer profile based in part on an inventory produces at least two useful results. The first result is that the end user has a higher probability of getting a complete set of software reloaded onto their computer for the user's work flow needs. Many users are not even aware of all the software applications and products that are loaded on their computer to make it work properly and to provide a level of security. A software application that the user needs is unlikely to be forgotten using the present invention as may happen when just the system administrator is controlling the process.

A second useful result of collecting an inventory is that an inventory listing can be tied to a traceable registration which uniquely identifies the user associated with a client computer profile. This allows the appropriate client computer profile to be applied to the correct computer because the inventory listing and traceable registration can be checked by the user before migration takes place.

The traceable registration can be generated via the web-enabled interface when the user registers for the migration services. A web interface can also allow users to login from many different types of operating systems or hardware platforms using web browsers without the need for a hardware specific client connection.

Another valuable result of using a predetermined client computer profile is that a custom client computer profile can be created for each user. It is typical for individual users to need specialized applications based on their individual job duties. This custom profile allows a specific software set to be installed that includes applications requested by the user. In the past, update tools have often applied an identical image to every computer in a defined group. Unfortunately, an identical image may not include every application a specialized user may need and then system administrator will later have to visit each client computer and install specialized applications for specific users.

Once a client computer has received migrated software and hardware as predetermined by the client computer profile, then the deployment framework can supply user training using a web interface in the deployment framework. For example, a previously registered user may login and receive software training via Macromedia Flash® controls or an ActiveX® web control. Another method of delivering training using the deployment framework can be to activate a separate plug-in or program that delivers on-demand video, audio, text manuals, or other types of training materials.

In addition to the general operations that can take place in performing the client computer migrations, there are also more specific operations that may be included in performing the migration. One additional operation that can be performed as part of the client computer migration is backing up user specific data located on the client computer. This user specific data can include application work files such as word processing documents or spreadsheet documents that are archived and then later restored back onto the user's client computer. Alternatively, the user specific data may be application settings, options, printer settings, and similar information that can be archived for later restoration. The ability to collect user specific data is valuable because it saves users an extensive amount of time that would otherwise be spent in setting detailed application, desktop, and operating system settings.

In another embodiment, a user may select a uniform desktop to be loaded on their computer. Thus, if the user does not desire his own user settings to be saved, then uniform settings that are predetermined by a system administrator can be loaded onto the client computer. The migration of the system data is generally sent from a central system server across a network such as a local area network (LAN), wide area network (WAN), the Internet, or some similar network to the client computer.

A follow-up operation for the migration service can present a completion survey to the user after the migration of the software and hardware has taken place. A survey enables continued improvement of the deployment framework and processes in the framework. For example, if there is a problem with the management approval process or the correct software was not loaded for a user, this quality control information can be reported in a user completion survey.

With the present system for providing user controlled and automated migration of a user's client computer, a company can leverage an economy of scale to reduce the costs of deploying new hardware, refreshing software, distributing updates, or replacing operating systems. This leveraged economy increases as the company using the deployment framework continues to use the deployment framework periodically (e.g., each year or month). The deployment framework is also economical because the update tools can be changed with relatively little modification to the framework.

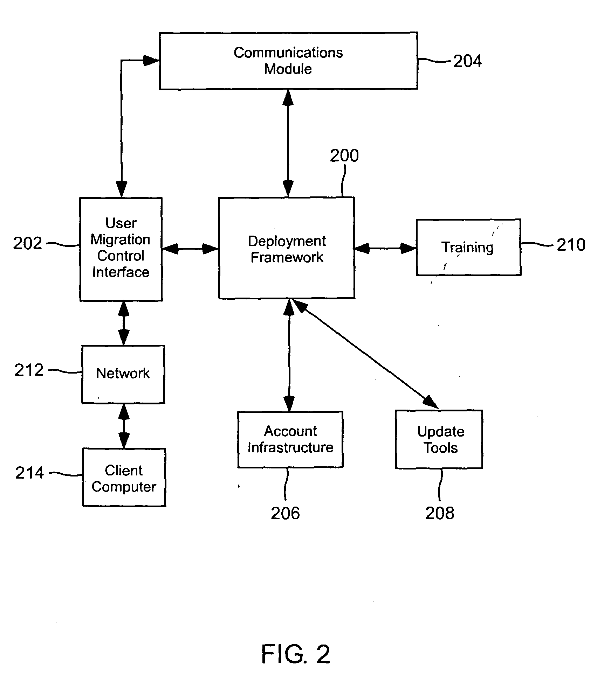

The present invention further includes a device for providing user controlled and automated migration of a user's client computer 214 as illustrated in FIG. 2. A deployment framework 200 can be included to enable user controlled migration of the client computer over a network 212. A user migration control interface 202 for the deployment framework is also included. The user migration control interface can control the migration of the client computer via electronic input from the user. The control interface can be a group of web pages or Java enabled applications that are distributed through conventional web browsers. Alternatively, a proprietary application can be used as a client to connect to the deployment framework.

A plurality of update tools 208 can be coupled to the deployment framework to perform the migration operations. As discussed before, the update tools can perform specific migration operations such as installing software across the network, backing up data, restoring data, taking inventory, or similar operations. The update tools can be software tools supplied by independent vendors that are plugged into the deployment framework.

A communications module 204 is provided for the deployment framework and is configured to receive approvals from users, management, and technical personnel. An additional function of the communications module routes the client computer migration information between the users, business management personnel, and the technical management personnel. This routing of the approval information helps provide a streamlined method of approving the migration of a client computer.

In addition, message routing logic may be included in the communications module or deployment framework to send the client computer profiles or inventory information to business management and technical management personnel. For example, a messaging interface and system can be provided to a business manager or technical supervisor who logs into the deployment framework. The messaging interface can provide a list of current approvals to be addressed. For example, when the business manager has approved of specific client computer issues, then the client computer profile can be routed onto the technical management for their approval. Alternatively, an email type of interface can be provided that notifies business managers and technical management personnel of approval needs. This email interface may be combined with the web interface so the notification comes via email or instant messaging but the approval actually takes place in the web interface via a web link accessed in the message.

An account infrastructure 206 can be in communication with the deployment framework and can be configured to take an inventory of the client computer's hardware and software. The inventory of the computer hardware enables the user or the system administrator to determine if the computer hardware is compliant or compatible with the updated software that may be loaded onto the computer. If the hardware is not compatible, the appropriate approvals for hardware upgrades can be requested from the user's manager and/or other technical personnel. If approval for upgraded computer hardware is provided, then a technician can be sent to update or replace the computer hardware.

FIG. 2 illustrates that electronic training 210 can be provided to the user after the update of the client computer 214 over the network 212. This training can be automated training delivered either through a web interface or through someproprietary video, audio, or text interface. The training may happen before or after the migration of the client computer as determined by the organization using the deployment framework.

The deployment framework can access an active directory component that provides an interface with the plurality of update tools. The active directory component can enable the deployment framework to locate and/or execute the update tools.. Thus, the active directory may provide an interface to tools such as inventory management, data backup, data restore, and software distribution tools.

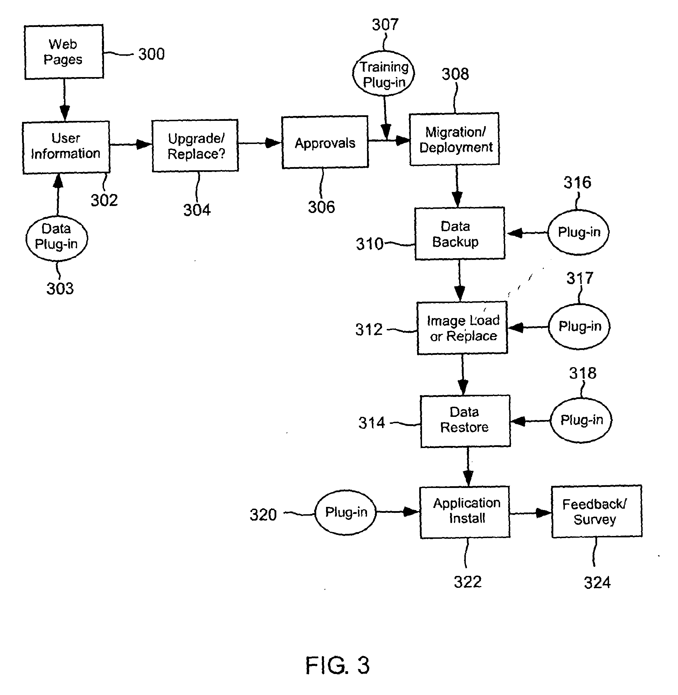

FIG. 3 illustrates an automated migration deployment process showing some of the data flow, processes, and software components involved in the migration process. A migration deployment framework is provided that can utilize a web based active server page (ASP) model or a similar dynamic user interface. A business entity that is using the deployment framework can use existing enterprise information technology applications to execute the migration activities.

As illustrated in FIG. 3, information can be collected via web pages 300 from users throughout the organization or corporation. The initial information collected may be login and identification information from the end user. Management information can also be collected from management personnel, and technical support information can be collected from system support personnel. The user information that is received 302 is stored with the deployment framework or in a separate database and information gathering tool 303 that is plugged into the framework. An analysis of the client computer can then be performed to create a client computer profile and determine if the client computer is compliant with specific upgrade criteria. The analysis may result in an upgrade or replacement of the client computer and/or its software 304.

As discussed previously, the deployment framework can provide a traceable registration that uniquely identifies the user and is tied together with a client computer profile. The client computer profile helps insure that the deployment process satisfies the user's requests when the update of the software and/or hardware is executed. The identification of users can utilize existing user directories or databases to gather information about end users.

Once the recommended upgrades or replacements of software and hardware have been identified, then requests for approvals can be distributed 306. The user will have an initial opportunity to approve the list of software and hardware for the migration. Next, management personnel responsible for the user may approve or disapprove all or part of the migration information. Finally, the technical staff may have the opportunity to approve or disapprove of specific technical issues related to the migration.

FIG. 3 further illustrates that training can optionally be performed 307 before the user's client computer is migrated or the training can be offered after the migration has been completed. One valuable part of the training program is that the training can include web pages to inform the end user about the migration process and set their expectations for the migration.

Once the approvals have been received, the user can have a final opportunity to approve the deployment ofthe migration 308. The user also has the opportunity to approve the day and time the deployment and migration will take place. For example, there may be certain days for the migration that are more convenient for the user. This scheduling feature allows the user to migrate their client computer on a day that does not conflict with their work schedule. During the deployment phase, a process can be provided that allows technical and project personnel to set scheduling date parameters for deployments. Certain days may be available to the user while other days may be blacked out. This allows the migration framework to load balance the migration of a large number of client computers on the computer network, because the deployment framework can support any number of sites and users.

FIG. 3 has illustrated the more business-oriented methods moving in a horizontal direction and the more technical processes moving in a vertical fashion. Accordingly, the migration deployment 308 includes the operation of backing up data from the client computer 310. The backup is performed using a backup plug-in 316 that connects into the framework. The data backup component can integrate the customer's current or chosen methods and tools for executing the data backup process. For example, this backup plug-in can be purchased from a separate vendor. This is a valuable feature of the deployment framework because the framework can use a plug-in or snap-in from the customer's existing desktop backup system, desktop inventory system, help desk system, preferred database engine, and other enterprise management applications. In one embodiment, the deployment framework uses standard simple message transfer protocol (SMTP) for messaging and web based reporting.

After the user's data has been backed up, the user or technical support may have selected a "wipe and load" of the existing client computer or a software refresh. Accordingly, the appropriate image (e.g., operating system image) can be loaded and/or replaced 312 using an image copying plug-in 317. The client data is then restored 314 using a restore plug-in 318 and any applications that need to be installed over the core platform or operating system are installed 322. In the re-imaging process, a client computer can be loaded with standard desktop software images or standard software suite packages. This application install can be done using an application install plug-in 320 that is coupled into the framework. A further part of the deployment framework is to provide a web-based survey 324 for feedback regarding the quality of the migration. The user satisfaction information can be collected for access by management and included in reports that help improve the migration process.

The deployment framework and its associated services can support migrations between operating systems such as Windows 95 to Windows XP. The framework also supports a variety of plug-ins for enterprise management. For example, LanDesk® can be used for desktop inventory, Remedy® can be used for help desk systems, and SQL Server 7 or 2000 can be used for the business process data. The framework supports upgrades for desktops, laptops, handheld computing devices, or other client computer systems. This system and method also allows upgrades to the basic input and basic output image (BIOS) of a computer. The framework can use known programming and scripting technologies such as Visual Basic®, Visual Basic Script@,PERL, CGI, or similar scripting technology. These framework scripts help automate the migration and upgrade process by activating existing information technology management applications that are already in place with the organization or customer.

The user of a client computer can be notified about the status of migration processes and how to access the web page interface via an email or personalized notification that includes hyperlinks. These hyperlinks can be used to execute processes, inform users, and promote the desktop migration process to business units and end users. Communications sent to the user can be sent from the executive managers, technical support levels, or even other users as defined within the framework.

The present system and method provide a refinement of and replacement for the typical manual or semi-manual upgrade approach to deploying and upgrading client computers across a company or an entire business enterprise. The automated deployment system of the present invention performs many business activities needed to upgrade operating systems, migrate user settings and data, and restore applications to the desired state. The automated processes optimize the speed and cost with which these changes can be made. **A** highly automated system also encourages users to be self-sufficient during the process and use as little technical support as possible. In addition, the automated nature of the framework makes the deployment less intrusive for those users who are having their client computer migrated.

Another valuable aspect of the present invention is that the framework utilizes standard deployment methodologies and plug-ins that may already exist in the customer's computing environment. Using components that already exist helps to reduce the cost of the overall deployment system. Many types ofplug-ins and update tools can be used within the present framework without detracting from the overall business aims of the present invention.

In addition to the results described above, the deployment framework also provides value in the area of reducing project complexity during migrations. There is increased flexibility for the automated system because of its plug-in structure and there is a faster return on the investment in the software upgrades. The framework also provides a system for consistent migrations and upgrades.

It is to be understood that the above-referenced arrangements are illustrative of the application for the principles of the present invention. Numerous modifications and alternative arrangements can be devised without departing from the spirit and scope of the present invention while the present invention has been shown in the drawings and described above in connection with the exemplary embodiments(s) of the invention. It will be apparent to those of ordinary skill in the art that numerous modifications can be made without departing from the principles and concepts of the invention as set forth in the claims.

## Claims

1. A method for providing a user controlled and automated migration of a client computer using a deployment framework with update tools, comprising the steps of:
determining user migration specifications for a client computer using information received from a user through a user migration control interface coupled to the deployment framework (100);
checking the migration compliance of the client computer that is associated with the user (102);
generating a client computer profile based on the migration compliance of the client computer and the user migration specifications (104);
receiving an electronic approval from the user via the user migration control interface to initiate the migration of the client computer (108); and
migrating the client computer as predetermined by the client computer profile using update tools connected to the deployment framework (110).

2. A method as in claim 1, wherein the step of checking the migration compliance further comprises the step of collecting an inventory of the client computer's hardware and software.

3. A method as in claim 2, wherein the step of collecting an inventory further comprises the step of creating a traceable registration that uniquely identifies the user associated with a client computer profile.

4. A method as in claim 1, wherein the step of determining user migration specifications further comprises the step of enabling the user to register for migration services via a web-enabled interface.

5. A method as in claim 1, wherein the step of migrating of the client computer further comprises the step of installing user requested software.

6. A method as in claim 1, wherein the step of migrating the client computer further comprises the step of supplying user training for migrated computer software and hardware using a web interface for the deployment framework.

7. A method as in claim 1, wherein the step of migrating of the client computer further comprises the step of backing up user specific data located on the client computer.

8. A device for providing user controlled and automated migration of a user's client computer, comprising:
a deployment framework (200) that enables user controlled migration of a client computer (214) over a computer network;
a user migration control interface (202) in the deployment framework (200) that controls the migration of the client computer (214) via an electronic approval from the user;
a plurality of update tools (208) coupled to the deployment framework (200) to perform migration operations;
a communications module (204) for the deployment framework (200), configured to route approvals from the user, management, and technical personnel; and
an account infrastructure (206) in communication with the deployment framework, configured to collect an inventory for the computer hardware and software associated with a user.

9. A device as in claim 8, wherein the plurality of update tools can be interchangable software plug-ins.

10. A device as in claim 8, wherein the user migration control interface further comprises a plurality of web pages to provide control of the deployment framework by the user.
